# FASCICULE DE BREVET EUROPEEN

(11) **EP 3 053 774 B1**
(45) Date de publication et mention de la délivrance du brevet: **20.09.2017**
(21) Numéro de dépôt: 16153968.9
(22) Date de dépôt: 02.02.2016
(51) Int. Cl.: B60N 2/22

(54) **SIÈGE POUR VÉHICULE FERROVIAIRE ET VÉHICULE ÉQUIPÉ DE CE SIÈGE**
SITZ FÜR SCHIENENFAHRZEUG, UND MIT DIESEM SITZ AUSGESTATTETES FAHRZEUG
RAILWAY VEHICLE SEAT AND VEHICLE PROVIDED WITH SAID SEAT

(30) Priorité: 03.02.2015 FR 1550842
(43) Date de publication de la demande: 10.08.2016
(73) Titulaire: Saira Seats SAS, 42160 Andrezieux Boutheon (FR)
(72) Inventeur: ALIROL, Louis, 42170 SAINT JUST-SAINT RAMBERT (FR); PATOUILLARD, Antoine, 42530 SAINT GENEST LERPT (FR)
(74) Mandataire: Delorme, Nicolas

(56) Documents cités:
- JP-A- 2001 070 089
- US-A- 3 224 808

## Description

La présente invention concerne un siège, notamment pour véhicule ferroviaire, et un véhicule équipé de ce siège.

Un siège pour véhicule ferroviaire comprend classiquement une assise sensiblement horizontale, un dossier et un châssis supportant l'assise et le dossier. L'assise ou le dossier sont traditionnellement mobiles par rapport au châssis, entre une position nominale dite de travail dans laquelle le dossier est sensiblement vertical et une position inclinée dite de repos dans laquelle le dossier présente une inclinaison permettant à un passager de se relaxer.

De manière générale, le réglage angulaire du dossier, qui est la mesure de l'angle entre le bas du dossier et l'assise, permet un ajustement progressif de la position du dossier de la position de travail, dans laquelle le réglage angulaire est de l'ordre de 110 à 115° jusqu'à la position de repos, dans laquelle le réglage angulaire est de l'ordre de 120 à 125°.

Pour améliorer le confort des passagers, il est constant de chercher à augmenter l'angle entre le bas du dossier et l'assise quand le siège est dans la position de repos.

Pour ce faire, une solution consiste à augmenter l'espace entre deux sièges en file, communément appelé pas entre sièges, pour permettre un plus grand déplacement de l'assise vers l'avant et de ce fait pour autoriser une inclinaison importante du dossier. Lors de cette inclinaison, l'assise se déplace vers l'avant en entrainant le bas du dossier de telle sorte à limiter l'intrusion du haut du dossier dans l'espace réservé au passager assis sur le siège situé à l'arrière. Le document de brevet US20030111888 montre un exemple de siège sans intrusion arrière.

Cependant, cette solution réduit le nombre de places transportées par voiture et donc augmente le coût du transport.

Or, une tendance actuelle est de réduire le pas des sièges pour augmenter le nombre de places transportées de façon à réduire le coût du transport, tout en permettant d'offrir au passager un confort amélioré.

Une solution pour augmenter le réglage angulaire sans augmenter le pas entre sièges consiste à réaliser l'ajustement angulaire en réduisant le déplacement de l'assise vers l'avant et en augmentant l'intrusion du dossier dans l'espace dédié au passager assis sur le siège situé à l'arrière.

Cependant, du fait de l'intrusion arrière du dossier, cette solution réduit le confort du passager assis sur le siège de derrière en réduisant son espace disponible et en réduisant l'accès au siège de derrière.

Il est par ailleurs connu du document de brevet JP2001070089 une structure de dossier pour un siège de véhicule. Le document de brevet US3224808 divulgue quant à lui un siège pour un aéronef.

Aussi, la présente invention vise à pallier tout ou partie de ces inconvénients en proposant un siège pour véhicule ferroviaire ayant un confort amélioré tout en étant d'un encombrement limité pour respecter le pas de siège, sans intrusion arrière du dossier.

A cet effet, la présente invention a pour objet un siège selon la revendication 1.

Ainsi, le siège selon l'invention offre une cinématique permettant à la fois un confort amélioré et une restriction du pas de siège.

En effet, le dossier en deux parties articulées procure davantage de confort, car il permet d'apporter un soutien lombaire progressif, par inclinaison de la deuxième partie relativement à la première partie.

En outre, le fait que la liaison entre la deuxième partie et la première partie soit au niveau d'une portion intermédiaire de la première partie permet de limiter l'encombrement du siège, et aussi sa masse puisqu'il n'est plus nécessaire pour supporter cette première partie de disposer d'un châssis s'élevant derrière et jusqu'en haut du dossier. Cela permet de respecter, voire réduire le pas de siège, sans préjudice du confort du passager.

Aussi, le fait que l'assise soit reliée à la deuxième partie du dossier, elle-même liée à la première partie du dossier, permet de déplacer simultanément, en un seul mouvement, à la fois l'assise et le dossier. Cela améliore l'ergonomie du siège.

Selon un mode de réalisation préféré, une extrémité supérieure de la deuxième partie est articulée à la portion intermédiaire de la première partie.

Cette disposition a l'avantage d'offrir un encombrement encore plus limité.

Selon l'invention, les premiers moyens de liaison comprennent une unité de guidage basse configurée pour guider une extrémité inférieure de la première partie par rapport au châssis.

Le guidage de la première partie au niveau de son extrémité inférieure permet de limiter l'encombrement vertical du siège, et limite également la masse du châssis, ce dernier n'ayant pas besoin de s'étendre tout le long du dossier.

Selon un mode de réalisation préféré, les premiers moyens de liaison comprennent une unité de guidage haute configurée pour guider par rapport au châssis la deuxième partie, ou la portion intermédiaire de la première partie entre une liaison pivot P1 reliant la deuxième partie à la première partie et une extrémité inférieure de la première partie.

Le fait que le guidage haut du dossier soit à hauteur de la liaison entre la deuxième partie et la première partie limite à la fois l'épaisseur de la partie haute du dossier et l'encombrement du siège, car il n'est pas nécessaire que le châssis s'étende jusqu'à une extrémité haute du dossier pour guider celui-ci. Cela permet de respecter, voire réduire le pas de siège, tout en bénéficiant d'un confort amélioré.

Selon un mode de réalisation préféré, cette unité de guidage haute comprend une glissière et un doigt de guidage mobile le long de la glissière, ce doigt de guidage étant confondu avec l'axe de rotation de la deuxième partie par rapport à la première partie.

Ainsi, l'unité de guidage haute est commune à la deuxième partie et à la première partie du dossier. Cela limite donc le nombre de composants mécaniques. Il en résulte un siège de structure plus compacte. Pour une distance inter-sièges donnée, cela implique plus de place, donc de confort, pour un passager.

Selon un mode de réalisation préféré, les deuxièmes moyens de liaison comprennent une unité de guidage arrière, l'unité de guidage arrière comprenant une glissière et un doigt de guidage mobile le long de la glissière, ce doigt de guidage étant confondu avec l'axe de rotation de la deuxième partie par rapport à l'assise.

Ainsi, l'unité de guidage arrière est commune à la deuxième partie et à l'assise. Là encore, cela permet de limiter le nombre de pièces mécaniques, si bien que le siège est ainsi plus compact et plus confortable.

Selon un mode de réalisation préféré, les deuxièmes moyens de liaison comprennent une unité de guidage avant, cette unité de guidage avant comprenant un doigt de guidage distant du doigt de guidage de l'unité de guidage arrière d'une distance supérieure ou égale à la moitié de la longueur de l'assise, de préférence supérieure ou égale à trois quarts de la longueur de l'assise.

Le fait de disposer ainsi d'un entraxe long, entre les doigts de guidage des unités de guidage avant et arrière permet de favoriser la stabilité et la résistance de l'assise.

Selon un mode de réalisation préféré, les deuxièmes moyens de liaison comprennent une unité de guidage avant, cette unité de guidage avant comprenant une glissière et un doigt de guidage mobile le long de la glissière, la glissière de l'unité de guidage avant étant solidaire de l'assise.

Le fait que cette glissière soit solidaire de l'assise, et non du châssis comme les glissières des autres unités de guidage, améliore sensiblement la stabilité de l'assise, sans préjudice de la compacité du siège.

Selon un mode de réalisation préféré, la deuxième partie du dossier a une forme convexe.

Cette forme convexe permet d'assurer à moindres coûts un soutien lombaire du dos du passager quand le siège est dans la position inclinée. Cette caractéristique améliore donc le confort à coûts réduits.

Avantageusement, la deuxième partie du dossier comprend deux montants latéraux délimitant entre eux un espace libre.

Ainsi, les montants latéraux de la deuxième partie du dossier offrent un soutien latéral permettant au passager de s'appuyer plus particulièrement sur un côté ou l'autre du dossier afin de se reposer. Cette caractéristique offre donc un meilleur confort.

Selon un autre aspect, l'invention concerne aussi un véhicule, notamment un véhicule ferroviaire, comprenant au moins un siège ayant les caractéristiques précitées.

Ce véhicule offre ainsi un confort amélioré dans un espace entre deux sièges consécutifs réduit.

D'autres caractéristiques et avantages ressortiront clairement de la description détaillée ci-après d'un mode de réalisation de la présente invention, donné à titre d'exemple non limitatif, en référence aux dessins annexés dans lesquels :
- Les figures 1 et 2 sont des vues de côté d'un siège selon un mode de réalisation de l'invention, respectivement dans une première position de confort, nominale, et dans une deuxième position de confort, inclinée,
- La figure 3 est une vue en perspective d'un siège selon un mode de réalisation de l'invention,
- Les figures 4 et 5 sont des vues de côté d'une partie d'un siège selon un mode de réalisation de l'invention, respectivement dans la première position de confort et dans la deuxième position de confort,
- Les figures 6 à 10 sont des vues en perspective de parties d'un siège selon un mode de réalisation de l'invention..

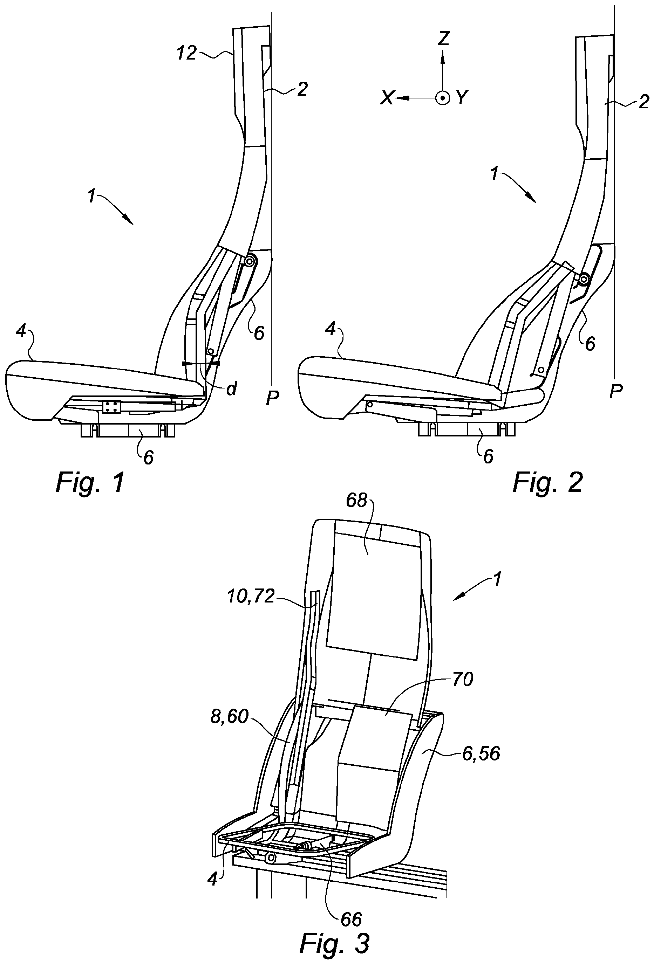

Les figures 1 à 3 montrent un siège 1 selon un mode de réalisation de l'invention. Le siège 1 est destiné à équiper un véhicule, notamment un véhicule ferroviaire.

On précise que la description est réalisée par rapport à un référentiel cartésien lié à un véhicule ferroviaire, l'axe X étant orienté dans la direction longitudinale du véhicule, l'axe Y étant orienté dans la direction transversale du véhicule et l'axe Z étant orienté dans la direction verticale du véhicule. Les orientations, directions et déplacements longitudinaux, transversaux, verticaux, avant, arrière sont ainsi définis par rapport à ce référentiel.

Le siège 1 comprend un dossier 2, une assise 4 et un châssis 6 pouvant être fixé au plancher du véhicule. Le châssis 6 est destiné à rester fixe par rapport au véhicule. Le châssis 6 peut inclure un pied, s'étendant par exemple verticalement sous l'assise 4, le pied permettant au siège 1 de reposer sur le plancher du véhicule.

Le siège 1 comprend aussi des premiers moyens de liaison reliant le dossier 2 au châssis 6 et des deuxièmes moyens de liaison reliant l'assise 4 au châssis 6. Les premiers et les deuxièmes moyens de liaison seront décrits plus en détails ci-après.

Le fait d'avoir une liaison entre le dossier 2 et le châssis 6, cette liaison guidant le déplacement du dossier 2 relativement au châssis 6, permet d'éviter une intrusion arrière du dossier 2. Ainsi, le siège 1 est de type sans intrusion arrière.

Aussi, les premiers moyens de liaison sont configurés pour permettre un déplacement en translation, du dossier 2 par rapport au châssis 6 sans intrusion arrière du dossier 2, et les deuxièmes moyens de liaison sont configurés pour permettre un déplacement de l'assise 4 par rapport au châssis 6, par exemple en translation, entre une position nominale et une position inclinée permettant toutes deux au siège 1 de recevoir un passager assis.

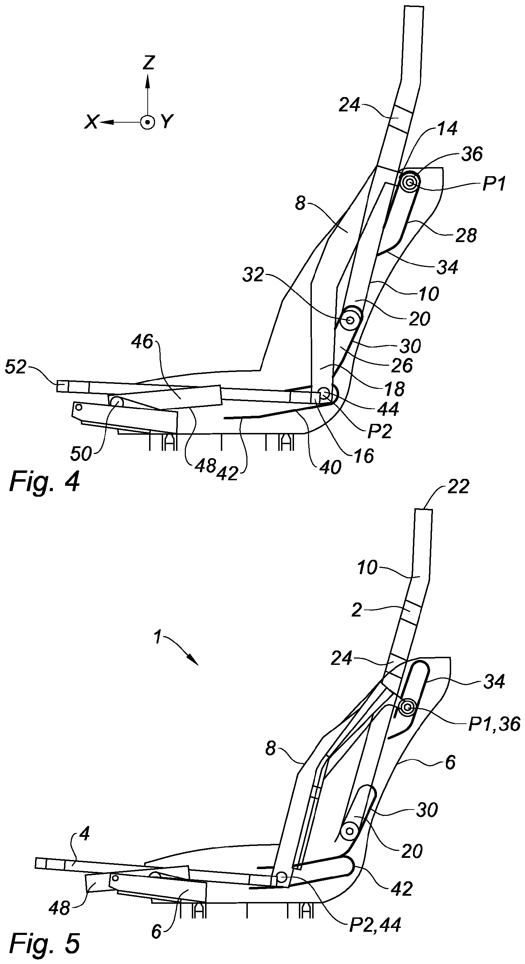

Selon l'exemple des figures 1 à 10, en position nominale, l'assise 4 est repoussée vers l'arrière du siège 1 et le dossier 2 est sensiblement droit (figures 1 et 4), son extrémité supérieure étant à son point le plus haut. En position inclinée, l'assise 4 est repoussée vers l'avant du siège 1 et le dossier 2 est affaissé, son extrémité supérieure étant à son point le plus bas (figures 2 et 5).

Ainsi, quelque soit la position, nominale ou inclinée, le dossier 2 est empêché de dépasser d'un plan P vertical tangent à l'arrière du siège 1, comme cela est visible sur les figures 1 et 2, et ce par l'intermédiaire des premiers moyens de liaison imposant une contrainte de mouvement entre le dossier 2 et le châssis 6.

Quelque soit la position du dossier 2, le siège 1 reste intégralement contenu dans un espace délimité par deux plans verticaux parallèles séparés d'une distance égale au pas de siège.

Comme illustré sur les figures 4 et 5, le dossier 2 est en deux parties 8, 10 articulées, dont une première partie 10 et destinée à soutenir le haut du dos et la tête d'un passager et une deuxième partie 8 destinée à soutenir une zone lombaire du dos du passager. Cette première partie 10 peut comprendre un appuie-tête 12.

Le dossier 2 comprend aussi une liaison pivot P1, d'axe transversal Y, reliant la deuxième partie 8, de préférence une extrémité 14 supérieure de la deuxième partie 8, et la première partie 10. Ainsi, la deuxième partie 8 et la première partie 10 sont mobiles en rotation l'une par rapport à l'autre, ce qui offre davantage de confort quand le dossier 2 est dans la position inclinée.

Le siège 1 comprend une liaison pivot P2, d'axe transversal Y, cette liaison pivot reliant l'assise 4, de préférence une extrémité 16 arrière de l'assise 4, et la deuxième partie 8 du dossier 2, de préférence une extrémité 18 inférieure de la deuxième partie 8. Ainsi, la deuxième partie 8 du dossier 2 et l'assise 4 sont mobiles en rotation l'une par rapport à l'autre, et le déplacement de l'assise 4 entraîne simultanément celui du dossier 2, et réciproquement.

La première partie 10 du dossier 2 comprend une extrémité 20 inférieure, une extrémité 22 supérieure et une portion 24 intermédiaire s'étendant entre l'extrémité 20 inférieure et l'extrémité 22 supérieure.

Il est important de noter que la première partie 10 est articulée à la deuxième partie 8 au niveau de la portion 24 intermédiaire, et non au niveau de l'extrémité 20 inférieure de la première partie 10. En d'autres termes, la liaison pivot P1 relie cette portion 24 intermédiaire de la première partie 10 à la deuxième partie 8.

Cela permet de limiter l'encombrement du siège 1. Cela permet aussi de limiter la masse du châssis 6, car ce dernier n'a pas besoin de s'étendre haut pour soutenir la première partie 10 du dossier 2; cette première partie 10 est en effet soutenue au niveau de la portion 24 intermédiaire par la deuxième partie 8. Cela facilite aussi la fabrication du châssis 6, notamment par injection.

Du fait de l'articulation du dossier 2 au niveau de la portion 24 intermédiaire, on bénéficie donc d'un siège 1 compact, permettant de respecter le pas de siège, voire de réduire le pas de siège, si bien que cela permet d'augmenter la quantité de siège par véhicule, sans préjudice du confort.

La liaison pivot P1 reliant la portion 24 intermédiaire de la première partie 10 à la deuxième partie 8 est située par rapport à l'extrémité 20 inférieure à une distance comprise entre un quart et trois quarts, préférentiellement entre un tiers et deux tiers, de la distance séparant l'extrémité 20 inférieure et l'extrémité 22 supérieure. Selon le mode de réalisation préféré illustré sur les figures 1 à 10, la liaison pivot P1 est située à égale distance de l'extrémité 20 inférieure et de l'extrémité 22 supérieure de la première partie 10. En d'autres termes, l'articulation entre la deuxième partie 8 et la première partie 10 du dossier 2 est de préférence sensiblement située au milieu de la première partie 10.

Toujours dans une optique de compacité du siège 1, de diminution de la masse et dimensions du châssis 6, la portion 24 intermédiaire de la première partie 10 est reliée, par la liaison pivot P1, à l'extrémité 14 supérieure de la deuxième partie 8.

Comme illustré sur les figures 4, 5 et 6, les premiers moyens de liaison comprennent ici une unité 26 de guidage basse et une unité 28 de guidage haute.

L'unité 26 de guidage basse est configurée pour guider l'extrémité 20 inférieure de la première partie 10 par rapport au châssis 6 quand le dossier 2 et l'assise 4 sont déplacés de la position nominale à la position inclinée et inversement.

En d'autres termes, le guidage de la première partie 10 du dossier 2 est avantageusement effectué en sa partie basse, ce qui limite l'encombrement.

L'unité 26 de guidage basse peut comprendre une glissière 30 et un doigt 32 de guidage mobile à l'intérieur de cette glissière 30. De préférence, la glissière 30 est solidaire du châssis 6 et le doigt 32 de guidage est relié à l'extrémité 20 inférieure de la première partie 10 du dossier 2.

L'unité 28 de guidage haute est configurée pour guider la deuxième partie 8, de préférence l'extrémité 14 supérieure de la deuxième partie 8, et/ou la portion 24 intermédiaire de la première partie 10 entre la liaison pivot P1 reliant la deuxième partie 8 à la première partie 10 et l'extrémité 20 inférieure de la première partie 10.

L'unité 28 de guidage haute s'étend avantageusement à hauteur de la liaison pivot P1 reliant la deuxième partie 8 et la première partie 10.

Ainsi, toute la partie du dossier 2 qui s'étend au-dessus de l'axe de la liaison pivot P1 reliant la deuxième partie 8 et la première partie 10 est avantageusement libre, c'est-à-dire exempte de liaison ou guidage par rapport au châssis 6. Cela limite l'encombrement du siège 1, limite la masse et les dimensions du châssis 6, car il n'est pas nécessaire que le châssis 6 s'étende tout le long du dossier 2 pour le guider.

Il ressort de ce qui précède que la première partie 10 du dossier 2 est avantageusement guidée exclusivement en bas et sensiblement au milieu, mais pas au-delà de l'articulation reliant la deuxième partie 8 et la première partie 10.

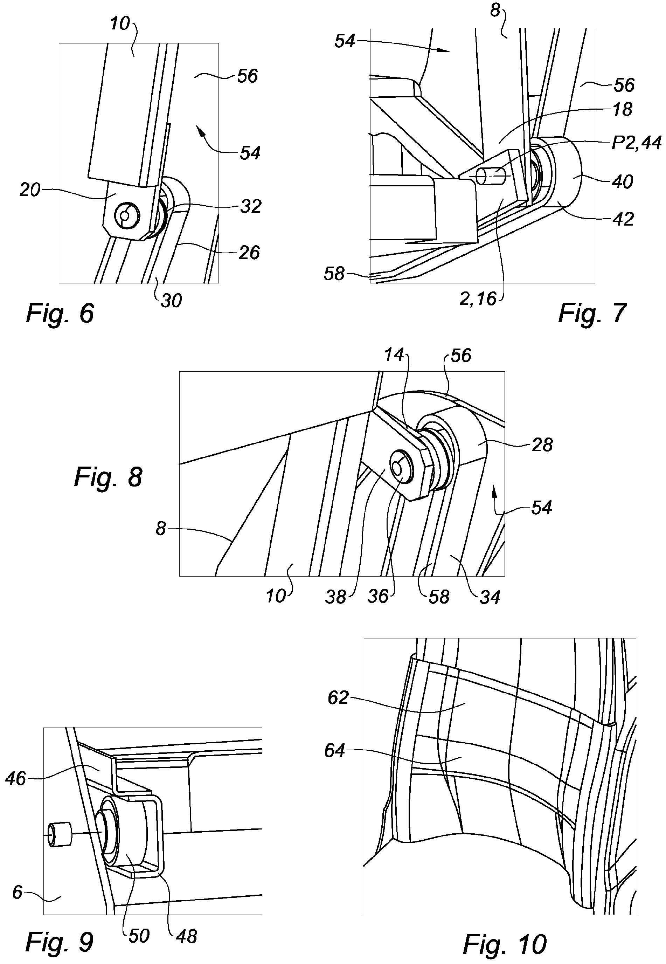

Comme illustré en détail sur la figure 8, l'unité 28 de guidage haute peut comprendre une glissière 34 et un doigt 36 de guidage mobile à l'intérieur de cette glissière 34. De préférence, la glissière 34 est solidaire du châssis 6 et le doigt 36 de guidage est relié à l'extrémité 14 supérieure de la deuxième partie 8 et/ou à la portion 24 intermédiaire de la première partie 10.

De préférence, comme illustré sur la figure 8, le doigt 36 de guidage de l'unité 28 de guidage haute est en fait l'axe de la liaison pivot P1 reliant la deuxième partie 8 et la première partie 10.

Ainsi, l'unité 28 de guidage haute est commune à la deuxième partie 8 et à la première partie 10 du dossier 2. Le nombre de composants mécaniques est ainsi réduit : le siège 1 est plus compact, ce qui permet d'améliorer le confort en respectant le pas de siège.

Avantageusement, la portion 24 intermédiaire de la première partie 10 comprend un bras 38 de déport, visible sur la figure 8, pouvant s'étendre de façon sensiblement transversale à la première partie 10 et la liaison pivot P1 reliant la première partie 10 et la deuxième partie 8 est ménagée sur ce bras 38 de déport.

Ainsi, le dossier 2 offre plus d'inclinaison, sans intrusion arrière. Le confort se trouve amélioré sans préjudice de la compacité du siège 1, c'est-à-dire en respectant le pas de siège.

Selon l'exemple de la figure 8, le bras 38 de déport peut comprendre un alésage à l'intérieur duquel s'étend l'axe 36 de la liaison pivot P1 reliant la deuxième partie 8 et la première partie 10.

Le siège 1 comprend ici en outre une unité 40 de guidage arrière configurée pour guider l'assise 4, de préférence une extrémité 16 arrière de l'assise 4, et/ou la deuxième partie 8 du dossier 2, de préférence l'extrémité 18 inférieure de la deuxième partie 8, par rapport au châssis 6. Dans le premier cas, l'unité 40 de guidage arrière appartient aux deuxièmes moyens de liaison, dans le deuxième cas, l'unité 40 de guidage arrière appartient aux premiers moyens de liaison.

Comme illustré sur la figure 7, l'unité 40 de guidage arrière peut comprendre une glissière 42 et un doigt 44 de guidage mobile à l'intérieur de cette glissière 42. De préférence, la glissière 42 est solidaire du châssis 6 et le doigt 44 de guidage est relié à la deuxième partie 8, notamment à l'extrémité 18 inférieure de la deuxième partie 8, et/ou à l'assise 4.

De manière avantageuse, le doigt 44 de guidage de l'unité 40 de guidage arrière est l'axe de la liaison pivot P2 reliant la deuxième partie 8 et l'assise 4.

Ainsi, l'unité 40 de guidage arrière est commune à la deuxième partie 8 et à l'assise 4. Là encore, cela permet de limiter le nombre de pièces mécaniques, si bien que le siège 1 est ainsi plus compact et plus confortable.

Lorsque l'unité 40 de guidage arrière relie l'assise 4 uniquement au châssis 6 et que l'unité 28 de guidage haute relie la première partie 10 uniquement au châssis 6, la deuxième partie 8 du dossier 2 peut être dépourvue de guidage, de liaison avec le châssis 6.

Comme illustré sur les figures 4, 5 et 9, les deuxièmes moyens de liaison comprennent une unité 46 de guidage avant configurée pour guider l'assise 4 par rapport au châssis 6.

L'unité 46 de guidage avant peut comprendre une glissière 48 et un doigt 50 de guidage mobile à l'intérieur de cette glissière 48.

De préférence, la glissière 48 est solidaire de l'assise 4 et le doigt 50 de guidage est relié au châssis 6, ce qui permet de placer le doigt 50 de guidage le plus proche possible d'une extrémité avant de l'assise 4 afin de bénéficier d'une stabilité améliorée, sans préjudice de la compacité du siège 1.

Le doigt 50 de guidage de l'unité 46 de guidage avant et le doigt 44 de guidage de l'unité 40 de guidage arrière sont avantageusement distants d'une distance supérieure ou égale à la moitié de la longueur de l'assise 4, c'est-à-dire de la distance séparant l'extrémité 52 avant de l'extrémité 16 arrière de l'assise 4, et de préférence supérieure ou égale à trois quarts de la longueur de l'assise 4. Cela améliore aussi la stabilité de l'assise 4.

On notera que les unités de guidage, notamment basse, haute et arrière, s'étendent avantageusement latéralement, c'est-à-dire sur les côtés du dossier 2 ou de l'assise 4. Les glissières 30, 34, 42, 48 s'étendent par exemple dans le plan longitudinal XZ, et les doigts 32, 36, 44, 50 de guidage s'étendent par exemple de façon sensiblement parallèle à la direction transversale Y.

Avantageusement, les glissières 30, 34, 42 des unités de guidage basse, haute et arrière peuvent être ménagées sur une paroi 54 intérieure d'un flasque 56 latéral du châssis 6.

En particulier, les glissières 30, 34, 42 des unités de guidage basse, haute et arrière, peuvent être formées par une nervure 58 en saillie délimitant une rainure ayant pour paroi de fond une partie de la paroi 54 intérieure du flasque 56 correspondant.

Les glissières 30, 34, 42, 48 peuvent être rectilignes ou curvilignes.

De préférence, la glissière 34 de l'unité 28 de guidage haute et la glissière 30 de l'unité 26 de guidage basse sont non parallèles : elles forment entre elles un angle différent de 0° ou 180°. Cela permet de créer une inclinaison plus prononcée du dossier 2 par rapport à la verticale en position inclinée.

De même, toujours dans le but d'améliorer le confort du passager sans augmenter l'encombrement, la glissière 48 de l'unité 46 de guidage avant et la glissière 42 de l'unité 40 de guidage arrière sont préférentiellement non parallèles : elles forment entre elles un angle différent de 0° ou 180°.

Comme visible sur les figures 1 à 5, la deuxième partie 8 du dossier 2 a, vue depuis l'assise 4, une forme convexe, par exemple sensiblement curviligne, ce qui améliore le confort du passager en lui offrant un soutien lombaire, mais sans composant additionnel, ce qui est avantageux en termes de coûts et d'encombrement.

Par ailleurs, la deuxième partie 8 du dossier 2 comprend de préférence deux montants 60 latéraux délimitant entre eux un espace libre permettant d'offrir un soutien latéral au passager. La deuxième partie 8 peut aussi comprendre une coque 70 fixée, par exemple soudée, aux montants 60 pour supporter une garniture 62.

De façon similaire, la première partie 10 peut comprendre deux montants 72 latéraux, et le cas échéant une coque 68 fixée, par exemple soudée, aux montants 72 latéraux pour supporter une garniture.

Comme illustré à la figure 10, le dossier 2 peut comprendre une garniture 62 ayant un galbe permettant le soutien latéral et une zone 64 centrale horizontale de forme convexe pour le soutien lombaire. En deçà de cette zone 64 centrale, la garniture 62 est très réduite en épaisseur pour autoriser un grand espace aux genoux avec un pas de siège 1 minimum. A titre d'exemple, la largeur d du dossier 2 en-dessous de la zone 64 centrale, c'est-à-dire sensiblement à hauteur des genoux d'un passager, comme représenté sur la figure 1, est inférieure ou égale à 30 mm.

Pour une question de masse et de tenue mécanique, les montants 60, 72, la coque 70 et l'armature d'assise 4 peuvent être en acier, la coque 68 et les flasques 56 en aluminium, tandis que le châssis 6 peut comprendre des éléments en aluminium et des éléments en plastique.

Le siège 1 peut comprendre une tablette montée mobile en rotation par rapport au dossier 2 entre une position déployée dans laquelle la tablette est sensiblement horizontale pour permettre à un passager d'y poser un objet et une position rangée dans laquelle la tablette est sensiblement verticale, rabattue contre le dossier 2.

On notera que le siège 1 peut avantageusement comprendre un actionneur 66 destiné à faciliter le déplacement de l'assise 4 et/ou du dossier 2 de la position nominale à la position inclinée, et inversement. Des moyens de commande, comme un bouton de commande, peuvent être prévus pour permettre à un passager de commander l'actionneur 66. Selon l'exemple des figures 1 à 10, l'actionneur est un vérin à gaz ou ressort à gaz.

De préférence, le siège 1 comprend un unique actionneur 66. Cela est suffisant, car l'assise 4 et le dossier 2 sont reliés : le déplacement de l'un entraîne simultanément le déplacement de l'autre. Cela permet de surcroît de diminuer le nombre de composants, donc l'encombrement.

L'invention concerne aussi un véhicule, notamment un véhicule ferroviaire, comprenant au moins un siège 1 ayant les caractéristiques précitées.

Du fait de l'absence d'intrusion arrière, et d'un siège 1 compact, il est possible de réduire le pas de siège, et en conséquence d'augmenter la quantité de siège par véhicule, sans pour autant avoir lieu au détriment du confort.

En fonctionnement, pour placer le siège 1 dans la position inclinée, un utilisateur peut enclencher l'actionneur 66, par exemple en appuyant sur un bouton. L'actionneur 66 assiste l'utilisateur dans le déplacement de l'assise 4 vers l'avant, par exemple en translation. L'assise 4 est guidée par les glissières 42, 48 relativement au châssis 6.

Ce faisant, du fait de la liaison pivot P2 reliant l'assise 4 et la deuxième partie 8, la deuxième partie 8 est entraînée par l'assise 4 et se déplace simultanément à l'assise 4. Guidée le cas échéant par la ou les glissières 34, 42, la deuxième partie 8 se déplace relativement au châssis 6. Les glissières des unités de guidage sont agencées les unes par rapport aux autres de sorte que l'angle entre l'assise 4 et la deuxième partie 8 augmente, ce qui accroît le confort pour le passager.

Du fait de la liaison pivot P1 reliant la deuxième partie 8 à la première partie 10, cette première partie est déplacée, par exemple e translation, par rapport au châssis 6 simultanément à la deuxième partie 8 et à l'assise 4. La première partie est ici guidée par les glissières 30, 32 relativement au châssis 6. L'agencement des glissières des unités de guidage est tel que l'angle entre la première partie 10 et la verticale augmente, sans pour autant que l'extrémité 22 supérieure de la première partie 10 s'étende en arrière au-delà d'un plan P tangent à l'arrière du siège 1, c'est-à-dire sans provoquer une intrusion arrière. Le dossier 2 tend à s'affaisser au cours de ce déplacement. La deuxième partie 8 et la première partie 10 articulées l'une par rapport à l'autre offrent un soutien lombaire progressif au passager.

Pour passer de la position inclinée à la position nominale, l'utilisateur peut de nouveau appuyer sur un bouton de commande, si bien que l'actionneur en se rétractant déplace l'assise 4 vers l'arrière du siège 1, ce qui provoque, selon une cinématique inverse de celle détaillée ci-dessus, un déplacement simultané de la deuxième partie 8 et de la première partie 10 du dossier 2. Le dossier 2 se redresse, retrouver une position plus haute et plus droite que dans la position inclinée.

Bien entendu, l'invention n'est nullement limitée au mode de réalisation décrit ci-dessus, ce mode de réalisation n'ayant été qu'à titre d'exemple. Des modifications sont possibles, notamment du point de vue de la constitution des divers éléments ou par la substitution d'équivalents techniques, pour autant que l'invention demeure telle que définie par les revendications. Ainsi, au lieu de glissières et doigts de guidage mobiles à l'intérieure de ces glissières, les premiers et/ou deuxièmes moyens de liaison peuvent comprendre des bielles parallèles reliant le cas échéant le châssis 6 à l'assise 4, ou à la deuxième partie 8, ou à la première partie 10.

## Revendications

1. Siège (1), notamment pour véhicule ferroviaire, comprenant un dossier (2), une assise (4), un châssis (6), des premiers moyens de liaison reliant le dossier (2) au châssis (6) et des deuxièmes moyens de liaison reliant l'assise (4) au châssis (6), les premiers et les deuxièmes moyens de liaison étant configurés pour guider un déplacement respectivement du dossier (2) et de l'assise (4) par rapport au châssis (6) entre une position nominale et une position inclinée, le siège (1) étant **caractérisé en ce que** le dossier (2) comprend une première partie (10) et une deuxième partie (8), la deuxième partie (8) étant articulée à la première partie (10) et articulée à l'assise (4), et **en ce que** la première partie (10) comprend une portion (24) intermédiaire, la deuxième partie (8) étant articulée à la première partie (10) sur cette portion (24) intermédiaire, dans lequel les premiers moyens de liaison sont configurés pour permettre un déplacement en translation du dossier (2) par rapport au châssis (6), et dans lequel les premiers moyens de liaison comprennent une unité (26) de guidage basse configurée pour guider une extrémité (20) inférieure de la première partie (10) par rapport au châssis (6).

2. Siège (1) selon la revendication 1, dans lequel une extrémité (14) supérieure de la deuxième partie (8) est articulée à la portion (24) intermédiaire de la première partie (10).

3. Siège (1) selon l'une des revendications 1 à 2, dans lequel les premiers moyens de liaison comprennent une unité (28) de guidage haute configurée pour guider par rapport au châssis (6) la deuxième partie (8), ou la portion (24) intermédiaire de la première partie (10) entre une liaison pivot (P1) reliant la deuxième partie (8) à la première partie (10) et une extrémité (20) inférieure de la première partie (10).

4. Siège (1) selon la revendication 3, dans lequel cette unité (28) de guidage haute comprend une glissière (34) et un doigt (36) de guidage mobile le long de la glissière (34), ce doigt (36) de guidage étant confondu avec l'axe de rotation de la deuxième partie (8) par rapport à la première partie (10).

5. Siège (1) selon l'une des revendications 1 à 4, dans lequel les deuxièmes moyens de liaison comprennent une unité (40) de guidage arrière, l'unité (40) de guidage arrière comprenant une glissière (42) et un doigt (44) de guidage mobile le long de la glissière (42), ce doigt (44) de guidage étant confondu avec l'axe de rotation de la deuxième partie (8) par rapport à l'assise (4).

6. Siège (1) selon la revendication 5, dans lequel les deuxièmes moyens de liaison comprennent une unité (46) de guidage avant, cette unité (46) de guidage avant comprenant un doigt (50) de guidage distant du doigt (44) de guidage de l'unité (40) de guidage arrière d'une distance supérieure ou égale à la moitié de la longueur de l'assise (4), de préférence supérieure ou égale à trois quarts de la longueur de l'assise (4).

7. Siège (1) selon l'une des revendications 1 à 6, dans lequel les deuxièmes moyens de liaison comprennent une unité (46) de guidage avant, cette unité (46) de guidage avant comprenant une glissière (48) et un doigt (50) de guidage mobile le long de la glissière (48), la glissière (48) de l'unité (46) de guidage avant étant solidaire de l'assise (4).

8. Siège (1) selon l'une des revendications 1 à 7, dans lequel la deuxième partie (8) du dossier (2) a une forme convexe.

9. Véhicule, notamment véhicule ferroviaire, comprenant au moins un siège (1) selon l'une des revendications 1 à 8.

## Patentansprüche

1. Sitz (1), insbesondere für ein Schienenfahrzeug, eine Rückenlehne (2), eine Sitzfläche (4), ein Gestell (6), erste Verbindungsmittel zum Verbinden der Rückenlehne (2) mit dem Gestell (6) und zweite Verbindungsmittel zum Verbinden der Sitzfläche (4) mit dem Gestell (6) umfassend, wobei die ersten und die zweiten Verbindungsmittel konfiguriert sind, um jeweils eine Bewegung der Rückenlehne (2) und der Sitzfläche (4) im Verhältnis zum Gestell (6) zwischen einer nominalen Position und einer geneigten Position zu leiten, wobei der Sitz (1) **dadurch gekennzeichnet ist, dass** die Rückenlehne (2) einen ersten Abschnitt (10) und einen zweiten Abschnitt (8) umfasst, wobei der zweite Abschnitt (8) am ersten Abschnitt (10) angelenkt ist, und an der Sitzfläche (4) angelenkt ist, und dadurch, dass der erste Abschnitt (10) einen Zwischenabschnitt (24) umfasst, wobei der zweite Abschnitt (8) an diesem Zwischenabschnitt (24) am ersten Abschnitt (10) angelenkt ist, wobei die ersten Verbindungsmittel konfiguriert sind, um eine Translationsbewegung der Rückenlehne (2) im Verhältnis zum Gestell (6) zu ermöglichen, und wobei die ersten Verbindungsmittel eine untere Führungseinheit (26) umfassen, die konfiguriert ist, um ein unteres Ende (20) des ersten Abschnitts (10) im Verhältnis zum Gestell (6) zu führen.

2. Sitz (1) nach Anspruch 1, wobei ein oberes Ende (14) des zweiten Abschnitts (8) am Zwischenabschnitt (24) des ersten Abschnitts (10) angelenkt ist.

3. Sitz (1) nach einem der Ansprüche 1 bis 2, wobei die ersten Verbindungsmittel eine obere Führungseinheit (28) umfassen, die konfiguriert ist, um im Verhältnis zum Gestell (6) den zweiten Abschnitt (8), oder den Zwischenabschnitt (24) des ersten Abschnitts (10) zwischen einer Schwenkverbindung (P1), die den zweiten Abschnitt (8) mit dem ersten Abschnitt (10) verbindet, und einem unteren Ende (20) des ersten Abschnitts (10) zu leiten.

4. Sitz (1) nach Anspruch 3, wobei diese obere Führungseinheit (28) eine Gleitschiene (34) und einen Führungsstift (36) umfasst, der entlang der Gleitschiene (34) beweglich ist, wobei dieser Führungsstift (36) mit der Drehachse des zweiten Abschnitts (8) im Verhältnis zum ersten Abschnitt (10) zusammenfällt.

5. Sitz (1) nach einem der Ansprüche 1 bis 4, wobei die zweiten Verbindungsmittel eine rückwärtige Führungseinheit (40) umfassen, wobei die rückwärtige Führungseinheit (40) eine Gleitschiene (42) und einen Führungsstift (44) umfasst, der entlang der Gleitschiene (42) beweglich ist, wobei dieser Führungsstift (44) mit der Drehachse des zweiten Abschnitts (8) im Verhältnis zur Sitzfläche (4) zusammenfällt.

6. Sitz (1) nach Anspruch 5, wobei die zweiten Verbindungsmittel eine vordere Führungseinheit (46) umfassen, wobei diese vordere Führungseinheit (46) einen Führungsstift (50) im Abstand zum Führungsstift (44) der rückwärtigen Führungseinheit (40) in einem Abstand größer oder gleich der Hälfte der Länge der Sitzfläche (4), vorzugsweise größer oder gleich drei Viertel der Länge der Sitzfläche (4) umfasst.

7. Sitz (1) nach einem der Ansprüche 1 bis 6, wobei die zweiten Verbindungsmittel eine vordere Führungseinheit (46) umfassen, wobei diese vordere Führungseinheit (46) eine Gleitschiene (48) und einen Führungsstift (50) umfasst, der entlang der Gleitschiene (48) beweglich ist, wobei die Gleitschiene (48) der vorderen Führungseinheit (46) fest mit der Sitzfläche (4) verbunden ist.

8. Sitz (1) nach einem der Ansprüche 1 bis 7, wobei der zweite Abschnitt (8) der Rückenlehne (2) eine konvexe Form aufweist.

9. Fahrzeug, insbesondere ein Schienenfahrzeug, zumindest einen Sitz (1) nach einem der Ansprüche 1 bis 8 umfassend.

## Claims

1. A seat (1), in particular for a railway vehicle, comprising a backrest (2), a base (4), a chassis (6), first connecting means connecting the backrest (2) to the chassis (6) and second connecting means connecting the base (4) to the chassis (6), the first and second connecting means being configured to guide a displacement respectively of the backrest (2) and of the base (4) with respect to the chassis (6) between a nominal position and an inclined position, the seat (1) being **characterized in that** the backrest (2) comprises a first part (10) and a second part (8), the second part (8) being hinged to the first part (10) and hinged to the base (4), and **in that** the first part (10) comprises an intermediate portion (24), the second part (8) being hinged to the first part (10) on this intermediate portion (24), wherein the first connecting means are configured to allow the backrest (2) to move in translation relative to the chassis (6), and wherein the first connecting means comprise a low guide unit (26) configured to guide a lower end (20) of the first part (10) with respect to the chassis (6).

2. The seat (1) according to claim 1, wherein an upper end (14) of the second part (8) is hinged to the intermediate portion (24) of the first part (10).

3. The seat (1) according to any of claims 1 to 2, wherein the first connecting means comprise a high guide unit (28) configured to guide, with respect to the chassis (6), the second part (8) or the intermediate portion (24) of the first part (10) between a pivot connection (P1) connecting the second part (8) to the first part (10) and a lower end (20) of the first part (10).

4. The seat (1) according to claim 3, wherein this high guide unit (28) comprises a slide (34) and a guide finger (36) movable along of the slide (34), this guide finger (36) being coincident with the axis of rotation of the second part (8) with respect to the first part (10).

5. The seat (1) according to any of claims 1 to 4, wherein the second connecting means comprise a rear guide unit (40), the rear guide unit (40) comprising a slide (42) and a guide finger (44) movable along the slide (42), this guide finger (44) being coincident with the axis of rotation of the second part (8) with respect to the base (4).

6. The seat (1) according to claim 5, wherein the second connecting means comprise a front guide unit (46), this front guide unit (46) comprising a guide finger (50) remote from the guide finger (44) of the rear guide unit (40) by a distance greater than or equal to half the length of the base (4), preferably greater than or equal to three quarters of the length of the base (4).

7. The seat (1) according to any of claims 1 to 6, wherein the second connecting means comprise a front guide unit (46), this front guide unit (46) comprising a slide (48) and a guide finger (50) movable along the slide (48), the slide (48) of the front guide unit (46) being secured to the base (4).

8. The seat (1) according to any of claims 1 to 7, wherein the second part (8) of the backrest (2) has a convex shape.

9. A vehicle, in particular a railway vehicle, comprising at least one seat (1) according to any of claims 1 to 8.
